(19) Europäisches Patentamt
European Patent Office
Office européen des brevets

(11) **EP 3 634 821 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **18721318.6**

(22) Anmeldetag: **24.04.2018**

(51) Int Cl.:
**B60T 8/17** *(2006.01)*       **B60T 8/1766** *(2006.01)*

(86) Internationale Anmeldenummer:
**PCT/EP2018/060400**

(87) Internationale Veröffentlichungsnummer:
**WO 2018/224216 (13.12.2018 Gazette 2018/50)**

(54) **VERFAHREN UND BREMSANLAGE ZUR ELEKTRONISCHEN EINSTELLUNG DER BREMSKRAFTVERTEILUNG UND KRAFTFAHRZEUG MIT EINER SOLCHEN BREMSANLAGE**

METHOD AND BRAKING SYSTEM FOR ELECTRONICALLY SETTING THE BRAKE FORCE DISTRIBUTION AND MOTOR VEHICLE HAVING SUCH A BRAKING SYSTEM

PROCÉDÉ ET SYSTÈME DE FREINAGE POUR LE RÉGLAGE ÉLECTRONIQUE DE LA RÉPARTITION DE LA FORCE DE FREINAGE ET VÉHICULE À MOTEUR DOTÉ D'UN TEL SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2017 DE 102017005501**

(43) Veröffentlichungstag der Anmeldung:
**15.04.2020 Patentblatt 2020/16**

(73) Patentinhaber: **ZF CV Systems Hannover GmbH 30453 Hannover (DE)**

(72) Erfinder:
• **FLAUM, Nikolai**
  **30457 Hannover (DE)**
• **WALLBAUM, Torsten**
  **31089 Duingen (DE)**

(74) Vertreter: **Schiller, Harald**
  **ZF CV Systems Hannover GmbH**
  **Am Lindener Hafen 21**
  **30453 Hannover (DE)**

(56) Entgegenhaltungen:
DE-A1-102006 045 317       DE-A1-102011 118 130
DE-A1-102015 115 852       US-A1- 2007 193 802

**Beschreibung**

Die Erfindung betrifft ein Verfahren zur elektronischen Einstellung der Verteilung einer gewünschten Gesamtbremskraft in Teilbremskräften auf die Achsen eines Kraftfahrzeugs gemäß dem Oberbegriff des Anspruchs 1. Die Erfindung betrifft außerdem eine Bremsanlage zur elektronischen Einstellung der Verteilung einer gewünschten Bremskraft in Teilbremskräften gemäß dem Oberbegriff des Anspruchs 7. Die Erfindung betrifft ferner gemäß Anspruch 9 ein Kraftfahrzeug mit einer solchen Bremsanlage zur Durchführung des Verfahrens.

Die elektronische Bremskraftverteilung (englisch "electronic brake force distribution" EBD) ist ein System zur Stabilisierung von Kraftfahrzeugen. Im Unterschied zu konventionellen Bremssystemen mit Antiblockiersystem (ABS) verteilt die elektronische Bremskraftverteilung die insgesamt bereitzustellende Bremskraft durch Einstellung von Bremsdrücken zwischen den Achsen des Fahrzeugs und stabilisiert so das Kraftfahrzeug. Die elektronische Bremskraftverteilung ermöglicht eine bedarfsgerechte Auslegung der Bremsen eines Fahrzeugs. Die Hinterachsen können bei überwachtem Stabilitätsverhalten des Kraftfahrzeugs stärker zur Gesamtverzögerung des Kraftfahrzeugs herangezogen werden.

Bei der elektronischen Bremskraftverteilung berechnet ein elektronisches Steuergerät ständig die Schlupfunterschiede an den Vorder- und Hinterrädern. Überschreitet bei einem Bremsvorgang das Schlupfverhältnis einen vorgegebenen Stabilitäts-Grenzwert, wird durch Schließen von ABS-Druckeinlassventilen ein weiterer Anstieg des Bremsdrucks an der kritischen Achse unterbunden und/oder an anderen Achsen die Bremskraft verstärkt. Bei ansteigender Bremsanforderung, beispielsweise wenn der Fahrer die Bremspedalkraft und damit die Bremsanforderung anhebt, nimmt in der Regel auch der Schlupf an den Vorderrädern zu. Das Verhältnis der Schlupfwerte an den Rädern der Vorderachse und der betroffenen kritischen Achse wird wieder kleiner, das Druckeinlassventil wird nun wieder geöffnet, so dass der Bremsdruck an den Rädern der betreffenden Achse wieder ansteigen kann.

DE 38 29 951 A1 offenbart ein Verfahren zur Durchführung einer lastabhängigen Regelung des Bremsdrucks an einem Nutzfahrzeug, welches die Komponenten eines vorhandenen Antiblockiersystems ausnutzt, um damit eine automatisch-lastabhängige Bremsfunktion (ALB) zu realisieren. Bei den bekannten Verfahren soll der Bremsdruck und damit die Bremskraftverteilung achsspezifisch unterhalb der Blockiergrenze geregelt werden, wobei eine zwischenachsige Bremsdruckverteilung nach Maßgabe der Auswertung der von den Drehzahlsensoren gelieferten Raddrehzahlsignalen in einem Schlupfbereich automatisch geregelt wird, welcher unterhalb des Bereichs liegt, in dem die Antiblockierfunktion wirksam wird.

DE 10 2006 045 317 A1 offenbart eine elektronische Bremskraftverteilung, bei der die Bremskräfte statt in Abhängigkeit des Differenzschlupfs in Abhängigkeit der Fahrzeugverzögerung auf die Fahrzeugachsen verteilt werden. Die Fahrzeugverzögerung soll dabei mit Hilfe eines Beschleunigungssensors berechnet und/oder gemessen werden.

Aus DE 10 2011 118 130 B4 ist eine automatische Regelung der Bremskraftverteilung für Nutzfahrzeuge bekannt, bei der die Einstellung der Verteilung einer gewünschten Gesamtbremskraft in Teilbremskräften auf die Achsen des Nutzfahrzeugs in Abhängigkeit des Differenzschlupfs oder einer Differenzgeschwindigkeit erfolgt. Ein elektronisches Steuergerät ist dabei derart ausgebildet, dass bei einem Überschreiten eines Differenzschlupf-Schwellwerts oder eines Differenzgeschwindigkeits-Schwellwert durch den Differenzschlupf oder durch die Differenzgeschwindigkeit der Bremsdruck an der Hinterachse begrenzt wird. Der Differenzschlupf-Schwellwert oder der Differenzgeschwindigkeits-Schwellwert bei der bekannten elektronischen Regelung der Bremskraftverteilung in Abhängigkeit von der Bremsanforderung bestimmt. Mit steigender Bremsanforderung wird dabei der Schwellwert erhöht.

Bei der Bremskraftverteilung durch Regelung des Bremsdrucks wird die Bremskraft an der kritischen Achse reduziert und gegebenenfalls die Bremskräfte an allen anderen Achsen erhöht, um eine optimale Bremskraftverteilung gemäß den Vorgaben der Regelung zu erhalten. Nach jedem Regeleingriff wartet das System und prüft, ob die Korrektur erfolgreich war, das heißt, der aktuelle Zustand den Vorgaben entspricht. Sofern dies nötig ist, werden weitere Anpassungen vorgenommen, das heißt, folgen weitere Regeleingriffe. Die Bremskraftverteilung erfolgt dabei in einer Vielzahl von kleinen Anpassungsschritten. Insbesondere bei Nutzfahrzeugen mit mehreren Achsen wird mit zunehmender Anzahl der Achsen die Bremskraftverteilung komplizierter, so dass die Einstellung der Bremskraftverteilung oft mit sehr vielen kleinen Regeleingriffen einhergeht. Das Nachregeln wirkt oft unruhig und wird als unangenehm empfunden. Ferner ist für die Durchführung der Anpassungsmaßnahmen mit teils Druckerhöhung und Entlüftung zwecks Drucksenkung ein entsprechend großer Vorrat an Druckluft bereitzustellen.

Der Erfindung liegt die Aufgabe zugrunde, den Aufwand bei der laufenden Einstellung der Bremskraftverteilung bei Kraftfahrzeugen mit einer beliebigen Anzahl von Achsen zu reduzieren.

Diese Aufgabe wird erfindungsgemäß durch ein Verfahren zur elektronischen Einstellung der Verteilung einer gewünschten Gesamtbremskraft auf die Achsen eines Kraftfahrzeugs mit den Merkmalen des Anspruchs 1 gelöst. Die Aufgabe wird außerdem durch eine Bremsanlage zur elektronischen Einstellung der Verteilung einer gewünschten Gesamtbremskraft mit den Merkmalen des Anspruchs 7 gelöst. Ferner wird die Aufgabe gemäß Anspruch 9 durch ein Kraftfahrzeug mit einer solchen Bremsanlage zur Durchführung des Verfahrens gelöst.

Gemäß der Erfindung wird eine der Achsen als Bezugsachse ausgewählt und der jeweilige Differenzschlupf eines Paares von Achsen als Differenz des Schlupfwerts an der Bezugsachse und des jeweiligen Schlupfwerts einer der weiteren Achsen bestimmt. Bei Vorliegen von Differenzschlupf zwischen den Achsen unterhalb eines vorgegebenen Schwellwerts wird eine Teilbremskraft für die ausgewählte Bezugsachse ermittelt und eingestellt. Diese Bezugsachse ist eine der Achsen des Kraftfahrzeugs und jedes für die Bestimmung der Teilbremskraft der Bezugsachse betrachtete Paar von Achsen wird mit der Bezugsachse als Paarkomponente gebildet. Zur erfindungsgemäßen Einstellung der Verteilung der Gesamtbremskraft auf die Achsen wird somit der jeweilige Differenzschlupf zwischen der ausgewählten Bezugsachse und einer der übrigen Achsen des Kraftfahrzeugs ermittelt und ausgewertet. Anders ausgedrückt wird die Teilbremskraft für eine bestimmte, allen Paaren von Achsen gemeinsame, Bezugsachse eingestellt, wobei Differenzschlupf für jeweilige Paare von Achsen bezogen auf die Bezugsachse betrachtet und bei der Ermittlung der Teilbremskraft berücksichtigt wird, insbesondere bezogen auf die Vorderachse des Kraftfahrzeugs als Bezugsachse.

Mit vorgegebenem oder ermitteltem Schlupf-Kraftverhältnissen für die Achsen sowie im Voraus bestimmtem Wunschdifferenzschlupf für jedes Paar von Achsen ist eine optimierte Teilbremskraft für die Bezugsachse ermittelbar und dies bei einer beliebigen Anzahl weiterer Achsen des Fahrzeugs. Die Erfindung ermöglicht mit diesen Vorgaben eine Bestimmung der Teilbremskraft an der Bezugsachse unterhalb des vorgegebenen Schwellwerts unter vorteilhaften Bedingungen der vorgegeben Werte. Die Erfindung hat dabei erkannt, dass das Verhältnis zwischen der Bremskraft und dem Schupf an einer Achse im stabilen Bereich der $\mu$-Schlupfkurve im Wesentlichen linear verläuft. Unterhalb des vorgegebenen Schwellwerts, welcher so vorgegeben wird, dass der stabile Bereich der $\mu$-Schlupfkurve nicht verlassen wird, liegt ein charakteristisches Schlupf-Kraftverhältnis für die jeweilige Achse vor. Dieses wird laufend ermittelt oder im Voraus ermittelt und vorgegeben.

Mit einem bestimmten Wunschdifferenzschlupf für jedes Paar von Achsen kann somit bei Differenzschlupfen unterhalb des vorgegebenen Schwellwerts die Teilbremskraft an der Bezugsachse ermittelt werden. Der Wunschdifferenzschlupf für jedes betreffende Paar von Achsen wird nach vorgegebenen Optimierungsanforderungen vorgegeben, beispielsweise im Hinblick auf einen möglichst geringen Verschleiß. Die den Vorgaben entsprechenden Teilbremskräfte führen dann zur gewünschten Verschleißoptimierung. Gleichzeitig werden die maximal zulässigen Werte für den Differenzschlupf nicht überschritten.

Das erfindungsgemäße Verfahren unter Berücksichtigung eines vorgegebenen und damit prognostizierten Wunschdifferenzschlupfs und Schlupf-Kraftverhältnissen für die Achsen ist nur unterhalb eines vorgegebenen Schwellwerts für den Differenzschlupf vorgesehen. Überschreitet der Differenzschlupf diesen Schwellwert, so erfolgen Stabilitätseingriffe, beispielsweise übernimmt ein Antiblockiersystem die Einstellung der Bremsdrücke.

Zur Bestimmung der Teilbremskraft an der Bezugsachse wird an einem ersten Theorem die gewünschte Gesamtbremskraft des Kraftfahrzeugs als Summe der Teilbremskräfte der bei der Bremskraftverteilung berücksichtigten Achsen angenommen. Für das erste Theorem ergibt sich somit folgende Gleichung:

$$F_{Total} = F_1 + F_2 + F_3 + \ldots F_n \qquad \text{(Formel 1)}$$

wobei
$F_{Total}$ Gesamtbremskraft
$F_1$ Teilbremskraft an Bezugsachse
$F_2$ Teilbremskraft an zweiter Achse
$F_3$ Teilbremskraft an dritter Achse
$F_n$ Bremskraft an n-ter Achse
bezeichnet.

In einem zweiten Theorem wird der Differenzschlupf als Differenz der jeweiligen Produkte eines Schlupf-Kraftverhältnisses und der Teilbremskraft an der jeweiligen bei der Bremskraftverteilung berücksichtigten Achse angenommen. Das zweite Theorem entspricht somit der folgenden Gleichung:

$$\lambda_{1n} = \left(\frac{\delta\lambda}{\delta F}\right)_n * F_n - \left(\frac{\delta\lambda}{\delta F}\right)_1 * F_1 \qquad \text{(Formel 2)}$$

wobei

$\lambda_{1n}$ Differenzschlupf $\left(\frac{\partial\lambda}{\partial F}\right)_1$

$$\left(\frac{\delta\lambda}{\delta F}\right)_1$$

Schlupf-Kraftverhältnis an Bezugsachse $\left(\frac{\partial\lambda}{\partial F}\right)_n$

$$\left(\frac{\delta\lambda}{\delta F}\right)_n$$

Schlupf-Kraftverhältnis an n-ter Achse
bezeichnet.

Durch Umformulieren dieser Gleichung ergibt sich für die Teilbremskraft an der n-ten Achse die folgende Gleichung:

$$F_n = \frac{\left(\frac{\delta\lambda}{\delta F}\right)_1 * F_1 + \lambda_{1n}}{\left(\frac{\delta\lambda}{\delta F}\right)_n} \qquad \text{(Formel 3)}$$

$$F_n = \frac{\left(\frac{\partial\lambda}{\partial F}\right)_1 * F_1 + \lambda_{1n}}{\left(\frac{\delta\lambda}{\delta F}\right)_n}$$

Durch die erfindungsgemäße Verknüpfung des ersten Theorems mit dem zweiten Theorem unter Berücksichtigung der Schlupf-Kraftverhältnisse der Achsen sowie des vorgegebenen Wunschdifferenzschlupfs ist die Teilbremskraft an der Bezugsachse entsprechend diesen optimalen Vorgaben präzise bestimmbar. Für die Bestimmung der Teilbremskraft an der Bezugsachse ergibt sich die folgende Gleichung:

$$F_1 = \frac{F_{Total} - \left(\frac{\lambda_{12}}{\left(\frac{\delta\lambda}{\delta F}\right)_2}\right) - \left(\frac{\lambda_{13}}{\left(\frac{\delta\lambda}{\delta F}\right)_3}\right) - \left(\frac{\lambda_{1n}}{\left(\frac{\delta\lambda}{\delta F}\right)_n}\right)}{1 + \frac{\left(\frac{\delta\lambda}{\delta F}\right)_1}{\left(\frac{\delta\lambda}{\delta F}\right)_2} + \frac{\left(\frac{\delta\lambda}{\delta F}\right)_1}{\left(\frac{\delta\lambda}{\delta F}\right)_3} + \frac{\left(\frac{\delta\lambda}{\delta F}\right)_1}{\left(\frac{\delta\lambda}{\delta F}\right)_n}} \qquad \text{(Formel 4)}$$

Durch den Bremsbetrieb mit einem vorgegebenen Wunschdifferenzschlupf sowie individueller Schlupf-Kraftverhältnisse für die Achsen wird bei Differenzschlupfen unterhalb des erfindungsgemäß vorgegebenen Schwellwerts die Anzahl der zur Einstellung der Bremskraftverteilung erforderlichen Stellmaßnahmen drastisch verringert. Auf diese Weise wird der Luftverbrauch der Bremsanlage reduziert und darüber hinaus für ein ruckfreies und dabei stabiles Bremsen gesorgt.

In einer vorteilhaften Ausführungsform der Erfindung werden die Teilbremskräfte der weiteren Achsen unter Berücksichtigung der bereits ermittelten Teilbremskraft für die Bezugsachse nach dem zweiten Theorem bzw. der vorstehend als Formel 3 angegebenen Umformulierung des zweiten Theorems bestimmt. Dabei können für eine beliebige Anzahl von Achsen Teilbremskräfte der jeweiligen Achsen mit optimierter Verteilung der Gesamtbremskraft ermittelt werden.

Bevorzugt werden die Schlupf-Kraftverhältnisse für die erfindungsgemäße Bestimmung der Teilbremskraft für die Bezugsachse entsprechend der Steigung im stabilen Bereich der jeweiligen Haftreibungszahl-Schlupf-Kurven (μ-

Schlupf-Kurven) der Räder an den jeweiligen Achsen vorgegeben. Die Steigung der Haftreibungszahl/Schlupf-Kurve ist im stabilen Bereich annähernd konstant, so dass der Wert der Steigung die Charakteristik der jeweiligen Radbremsung repräsentiert und in besonders geeigneter Weise für die Zwecke der erfindungsgemäßen Bestimmung der Teilbremskraft an der Bezugsachse herangezogen werden kann.

Zuverlässigkeit der Berechnung der Teilbremskräfte im Rahmen der Bremskraftverteilung ist bei Vorgabe von Schwellwerten der Differenzschlupf unter 10% gegeben. Vorteilhaft erfolgt die Bremskraftverteilung in einer Berechnung auf der Grundlage des im Voraus ermittelten, beziehungsweise anders ausgedrückt geschätzten Wunschdifferenzschlupfs für jedes Paar von Achsen unterhalb eines Schwellwerts von etwa 5 %, so dass ein entsprechender Schwellwert von 5 % vorgegeben wird. Da für die meisten Reifen das Maximum der μ-Schlupf-Kurven bei einem Schlupf um etwa 10 % liegt, ist durch die Vorgabe des Schwellwerts von 5 % sichergestellt, dass die im Voraus ermittelten und bei der Berechnung vorgegebenen Schlupf-Kraftverhältnisse für die Achsen realistisch geschätzt sind und daher die Bremskraftverteilung maßgeblich von dem vorgegebenen Wunschdifferenzschlupf bestimmt wird. Dieser Wunschdifferenzschlupf wird im Voraus beispielsweise im Hinblick auf möglichst geringen Verschleiß optimiert.

Vorteilhaft wird jeweils ein Wunschdifferenzschlupf für jedes Paar von Achsen ermittelt oder vorgegeben, wobei die Position der jeweiligen Achse in der Reihenfolge der Achsen des Fahrzeugs berücksichtigt wird.

Die Ermittlung der Teilbremskräfte ist vereinfacht, wenn als Bezugsachse die in Fahrtrichtung vorn liegende Achse des Fahrzeugs, das heißt dessen Vorderachse, herangezogen wird.

Bei einer Bremsanlage zur elektronischen Einstellung der Bremskraftverteilung unter Berücksichtigung im Voraus bestimmbarer Schlupf-Kraftverhältnisse für die Achsen sowie einem im Voraus bestimmten Wunschdifferenzschlupfe für alle Paare von Achsen sind einer Bremssteuereinheit Sensoren zur achsweisen Erfassung von Informationen zur Bestimmung von Schlupfwerten einer den Schlupf an der jeweiligen Achse repräsentierenden Größe zugeordnet. Vorzugsweise werden hierzu die Drehzahlsensoren der jeweiligen Räder herangezogen, welche für vorhandene elektronische Bremssysteme oder wenigstens für ein Antiblockiersystem vorhanden sind. Aus den Informationen der Drehzahlsensoren wird der Schlupfwert des jeweiligen Rades ermittelt. Für die Bestimmung des Differenzschlupfs zweier Achsen können die Schlupfwerte zweier Räder derselben Achse gemittelt sein. Alternativ zur Heranziehung des Schlupfs der jeweiligen Achse kann aus den Informationen der Drehzahlsensoren die Geschwindigkeit beziehungsweise die Differenzgeschwindigkeit herangezogen werden.

Ein Ausführungsbeispiel der Erfindung ist nachstehend anhand der Zeichnung näher erläutert. Es zeigen:

Fig. 1    ein schematisch dargestelltes Ausführungsbeispiel einer Bremsanlage eines Nutzfahrzeugs,

Fig. 2    ein Flussschaubild eines Ausführungsbeispiels eines Verfahrens zur elektronischen Einstellung der Bremskraftverteilung,

Fig. 3    ein repräsentativer Verlauf einer μ-Schlupf-Kurve,

Fig.4    eine Vergrößerung des Ausschnitts IV in Fig. 3.

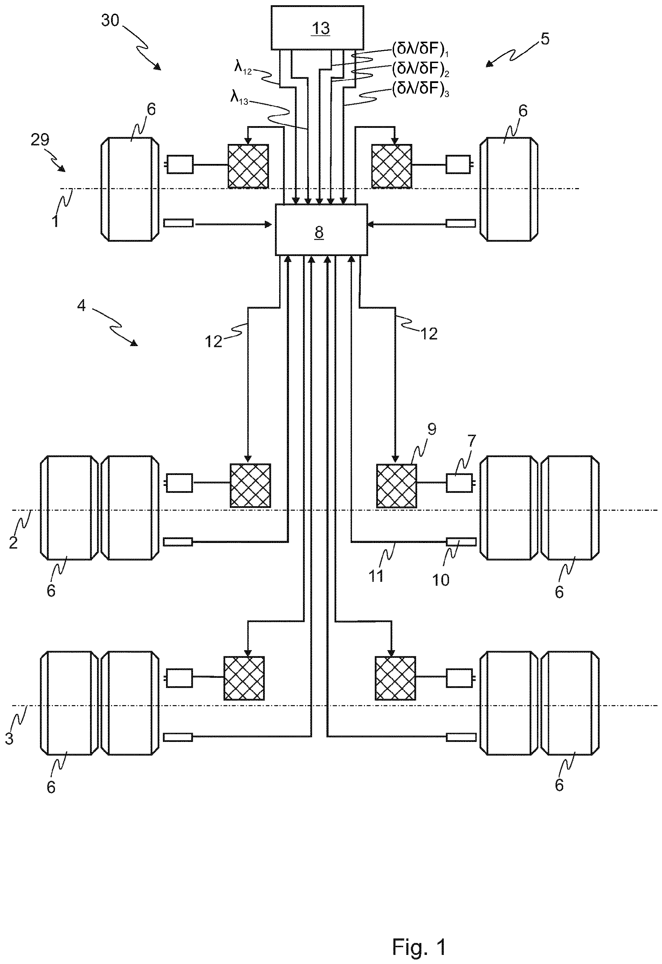

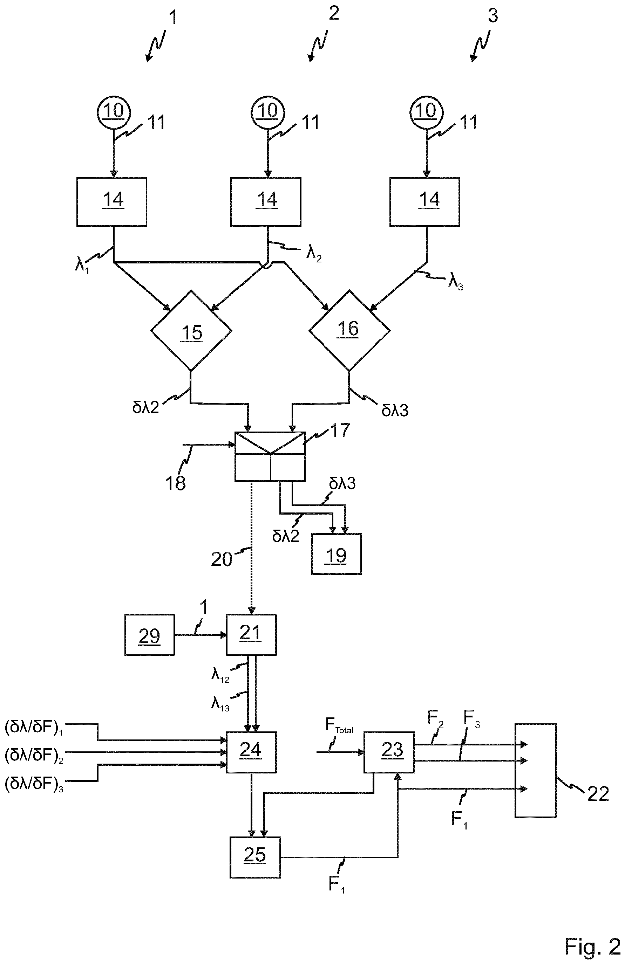

Fig. 1 zeigt einen elektrisch-pneumatischen Plan der Bremsanlage 4 eines Kraftfahrzeugs 5, nämlich eines Nutzfahrzeugs 30. Das Kraftfahrzeug hat im Ausführungsbeispiel drei Achsen 1, 2, 3, nämlich eine in der Vorwärtsrichtung vorn liegende Achse 1 (Vorderachse), eine zweite Achse 2 und eine dritte Achse 3. Jede Achse 1, 2, 3 weist jeweils zwei beidseitig des Kraftfahrzeugs 5 angeordnete Räder 6 auf. Jedem Rad 6 ist jeweils eine pneumatisch betätigbare Radbremse 7 zugeordnet. Die Radbremsen 7 erzeugen unter der Wirkung eines Bremsdrucks jeweils Teilbremskräfte $F_1$, $F_2$, $F_3$ (Fig. 2) auf die jeweilige Achse 1, 2, 3.

Die Einstellung des Bremsdrucks und damit der Bremskräfte wird von einer elektronischen Bremssteuereinheit 8 überwacht. Jedem Rad 6 ist ein Drucksteuerventil 9 zugeordnet, welches von der Bremssteuereinheit 8 individuell ansteuerbar ist. Über eine entsprechende Ansteuerung des jeweiligen Drucksteuerventils 9 kann die Bremssteuereinheit 8 den Bremsdruck an jedem Rad 6 des Kraftfahrzeugs 5 und damit die Bremskraft der jeweiligen Achse individuell einregeln.

Die Bremssteuereinheit 8 und die Drucksteuerventile 9 sind wesentliche Elemente eines Antiblockiersystems (ABS) oder eines elektronischen Bremssystems (EBS), zu dem auch Drehzahlsensoren 10 an den jeweiligen Rädern 6 gehören. Jeder Drehzahlsensor 10 ist elektrisch mit der Bremssteuereinheit 8 verbunden und teilt der Bremssteuereinheit 8 laufend die von ihm erfassten Drehzahlmesswerte 11 mit. Über die Drehzahlmesswerte 11 ermittelt die Bremssteuereinheit 8 den Schlupf $\lambda_1$, $\lambda_2$, $\lambda_3$ der jeweiligen Achsen 1, 2, 3. Dabei können die Ergebnisse der einzelnen Räder 6 der jeweils gleichen Achsen zu einem die jeweilige Achse 1, 2, 3 repräsentierenden Ergebnis, das heißt dem Schlupf $\lambda_1$, $\lambda_2$, $\lambda_3$ (Fig. 2) für die jeweilige Achse 1, 2, 3, gemittelt werden.

Zur Einstellung einer bestimmten Bremskraft erzeugt die Bremssteuereinheit 8 elektrische Stellsignale 12 für die jeweiligen Drucksteuerventile 9. Dabei kann je nach Bedarf der Bremsdruck an jeder Radbremse 7 bedarfsweise erhöht, gehalten oder abgesenkt werden, um auf diese Weise eine bestimmte Bremskraft an den jeweiligen Rädern 6 zu erzeugen. Die Bremssteuereinheit 8 ist zur Einstellung der Bremskräfte in Abhängigkeit von Differenzschlupfen ausgebildet. Entsprechend werden aus den Schlupfwerten $\lambda_1$, $\lambda_2$, $\lambda_3$ für die einzelnen Achsen Differenzschlupfe $\delta\lambda 2$, $\delta\lambda 3$ ermittelt und einem betreffenden Paar 15, 16 von Achsen 1, 2, 3 zugeordnet. Der Differenzschlupf $\delta\lambda 2$ bezieht sich dabei auf den Schlupfunterschied zwischen der Vorderachse 1 und der zweiten Achse 2 und der Differenzschlupf $\delta\lambda 3$ auf den Schlupfunterschied zwischen der Vorderachse 1 und der dritten Achse 3.

Über die Drucksteuerventile 9 stellt die Bremssteuereinheit 8 auch die Verteilung einer gewünschten Gesamtbremskraft in Teilbremskräften auf die Achsen 1, 2, 3 des Kraftfahrzeugs 5 ein (Bremskraftverteilung 22 in Fig. 2). Hierzu sind in einem Speicherelement 13 für die Bremssteuereinheit 8 Vorgabewerte bereitgehalten, nämlich jeweils ein Schlupf-Kraftverhältnis für die Achsen des Kraftfahrzeugs 5, das heißt bei dem Ausführungsbeispiel eines Kraftfahrzeugs 5 mit drei Achsen entsprechend drei Schlupf-Kraftverhältnisse $(\delta\lambda/\delta F)_1$, $(\delta\lambda/\delta P)_2$, $(\delta\lambda/\delta F)_3$. Darüber hinaus werden in dem Speicherelement 13 im Voraus bestimmte Werte für den Wunschdifferenzschlupf $\lambda_{12}$, $\lambda_{13}$ bereitgehalten. Die elektronische Einstellung der Verteilung einer gewünschten Gesamtbremskraft in Teilbremskräften auf die Achsen 1, 2, 3 des Kraftfahrzeugs 5 ist nachstehend anhand von Fig. 2 näher erläutert.

Bei dem in Fig. 2 dargestellten Ausführungsbeispiel der elektronischen Einstellung der Bremsdruckverteilung werden für jede Achse 1, 2, 3 die Drehzahlmesswerte 11 der Drehzahlsensoren 10 einer Auswertung 14 zugeführt um einen Schlupf zu berechnen. Es werden demnach für die Achse 1 ein Schlupfwert $\lambda_1$, für die zweite Achse 2 ein Schlupfwert $\lambda_2$ und für die dritte Achse 3 ein Schlupfwert $\lambda_3$ ermittelt. Zur Ermittlung einer Teilbremskraft wird eine der Achsen 1, 2, 3 als Bezugsachse 29 ausgewählt und der jeweilige Differenzschlupf $\delta\lambda 2$, $\delta\lambda 3$ eines Paares 15, 16 von Achsen 1, 2, 3 als Differenz des Schlupfwerts $\lambda_1$ an der Bezugsachse 29 und des jeweiligen Schlupfwerts $\lambda_2$, $\lambda_3$ einer der weiteren Achsen 2, 3 bestimmt. Die Bezugsachse 29 ist im Ausführungsbeispiel die in Fahrtrichtung vorne liegende Achse 1 des Kraftfahrzeugs 5, das heißt dessen Vorderachse. Die Differenzschlupfe $\delta\lambda 2$, $\delta\lambda 3$ für jedes Paar 15, 16 von Achsen sind somit auf die als Bezugsachse 29 ausgewählte Achse 1 bezogen, für welche die Teilbremskraft $F_1$ ermittelt wird. Sämtliche Paare 15, 16 von Achsen 1, 2, 3, welche zur Ermittlung der Verteilung der Gesamtbremskraft hinsichtlich des jeweiligen Differenzschlupfs $\delta\lambda 2$, $\delta\lambda 3$ betrachtet werden, sind mit der Bezugsachse 29 als jeweiliger Paarkomponente gebildet.

In einem Vergleichsschritt 17 werden die laufend ermittelten Differenzschlupfe $\delta\lambda 2$, $\delta\lambda 3$ mit einem vorgegebenen Schwellwert 18 für den Differenzschlupf $\delta\lambda 2$, $\delta\lambda 3$ verglichen. Der Schwellwert 18 liegt vorzugsweise unterhalb von 10 % Schlupf, nämlich im gezeigten Ausführungsbeispiel bei etwa 5 % Schlupf. Bei Differenzschlupfen $\delta\lambda 2$, $\delta\lambda 3$ oberhalb des vorgegebenen Schwellwerts 18 erfolgt eine Regelung 19 des Bremsdrucks beziehungsweise der Bremskräfte in Abhängigkeit der laufend ermittelten Differenzschlupfe $\delta\lambda 2$, $\delta\lambda 3$.

Liegen beide Differenzschlupfe $\delta\lambda 2$, $\delta\lambda 3$ unterhalb des vorgegebenen Schwellwerts 18 für die aktuell ermittelten Differenzschlupfe $\delta\lambda 2$, $\delta\lambda 3$ so erfolgt eine Umschaltung 20 in einen Schätzmodus 21, in welchem für die Einstellung der Bremskraftverteilung 22 in Teilbremskräften $F_1$, $F_2$, $F_3$ der im Voraus ermittelte Wunschdifferenzschlupf $\lambda_{12}$, $\lambda_{13}$ für jedes Paar von Achsen 15, 16 sowie Schlupf-Kraftverhältnisse $(\delta\lambda/\delta F)_1$, $(\delta\lambda/\delta P)_2$, $(\delta\lambda/\delta F)_3$ für die Achsen 1, 2, 3 vorgegeben werden.

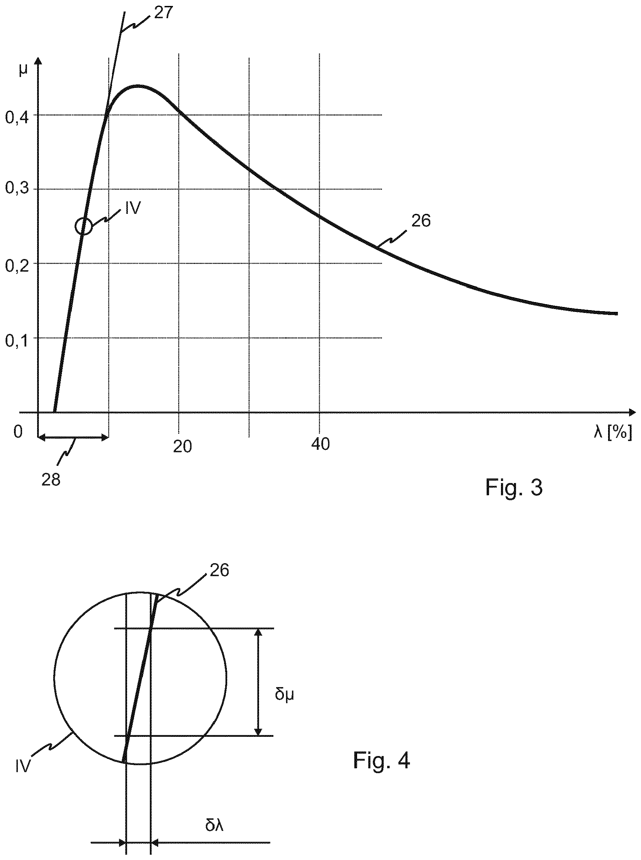

Fig. 3 zeigt eine schematisierte $\mu$-Schlupf-Kurve 26 bzw. Haftreibungszahl/ Schlupf-Kurve. Das Schlupf-Kraftverhältnis $(\delta\lambda/\delta F)_1$, $(\delta\lambda/\delta F)_2$, $(\delta\lambda/\delta F)_3$ entspricht qualitativ jeweils der Steigung 27 im stabilen Ast 28 der jeweiligen $\mu$-Schlupf-Kurve 26 für das entsprechende Rad. Fig. 4 veranschaulicht in dem Ausschnitt IV gemäß Fig. 3 den im Wesentlichen linearen Verlauf im stabilen Ast 28 mit einer Steigung 27. Die im Wesentlichen konstante Steigung 27 wird für die Zwecke der Schätzung des Schlupf-Kraftverhältnisses und damit für die Bremskraftverteilung 22 herangezogen. Der stabile Ast 27 der $\mu$-Schlupf-Kurven 26 reicht bis nahe dem Maximum der Kurve 26, welches bei etwa 10 % liegt, so dass mit der Vorgabe des Schwellwerts 18 von etwa 5 % sichergestellt ist, dass die Vorgabe realistischer Schlupfverhältnisse erfolgt.

Bei der Bremskraftverteilung 22 wird als erstes Theorem 23 die gewünschte Gesamtbremskraft $F_{Total}$ des Kraftfahrzeugs als Summe der Teilbremskräfte $F_1$, $F_2$, $F_3$ der bei der Bremskraftverteilung 22 berücksichtigten Achsen 1, 2, 3 angenommen. Dies entspricht der folgenden Beziehung:

$$F_{Total} = F_1 + F_2 + F_3$$

In einem zweiten Theorem 24 wird der der Differenzschlupf als Differenz der jeweiligen Produkte eines Schlupf-Kraftverhältnisses $(\delta\lambda/\delta F)_1$, $(\delta\lambda/\delta F)_2$, $(\delta\lambda/\delta F)_3$ und der Teilbremskraft $F_1$, $F_2$, $F_3$ an der jeweiligen der drei Achsen 1, 2, 3 bestimmt. Daraus ergibt sich die folgende Beziehung für das zweite Theorem 24:

$$\lambda_{1n} = \left(\frac{\delta\lambda}{\delta F}\right)_n * F_n - \left(\frac{\delta\lambda}{\delta F}\right)_1 * F_1$$

Durch Umformulieren dieses zweiten Theorems 24 ergibt sich für die Teilbremskraft an der n-ten Achse die folgende Gleichung:

$$F_n = \frac{\left(\dfrac{\delta\lambda}{\delta F}\right)_1 * F_1 + \lambda_{1n}}{\left(\dfrac{\delta\lambda}{\delta F}\right)_n}$$

Diese Gleichung berücksichtigt den Umstand, dass die Schlupf-Kraftverhältnisse $(\delta\lambda/\delta F)_1$, $(\delta\lambda/\delta P)_2$, $(\delta\lambda/\delta F)_3$ jeweils durch die Steigung 27 der jeweiligen μ-Schlupfkurve bestimmt sind.

Aus einer Verknüpfung 25 des ersten Theorems 23 mit dem zweiten Theorem 24 unter Berücksichtigung der vorgegebenen Schupf-Kraftverhältnisse $(\delta\lambda/\delta F)_1$, $(\delta\lambda/\delta F)_2$, $(\delta\lambda/\delta F)_3$ sowie des vorgegebenen Wunschdifferenzschlupfs $\lambda_{12}$, $\lambda_{13}$ ergibt sich für das Ausführungsbeispiel eines Kraftfahrzeugs 5 mit drei Achsen (1, 2, 3) die folgende Beziehung für die Ermittlung der Teilbremskraft $F_1$ an der Bezugsachse 29, das heißt der mit dem Bezugszeichen 1 bezeichneten Vorderachse:

$$F_1 = \frac{F_{Total} - \left(\dfrac{\lambda_{12}}{\left(\dfrac{\delta\lambda}{\delta F}\right)_2}\right) - \left(\dfrac{\lambda_{13}}{\left(\dfrac{\delta\lambda}{\delta F}\right)_3}\right)}{1 + \dfrac{\left(\dfrac{\delta\lambda}{\delta F}\right)_1}{\left(\dfrac{\delta\lambda}{\delta F}\right)_2} + \dfrac{\left(\dfrac{\delta\lambda}{\delta F}\right)_1}{\left(\dfrac{\delta\lambda}{\delta F}\right)_3}}$$

Unter Berücksichtigung der ermittelten Teilbremskraft $F_1$ für die Bezugsachse 29, das heißt im Ausführungsbeispiel der Vorderachse 1, wird die jeweilige Teilbremskraft $F_2$, $F_3$ an den weiteren Achsen nach dem zweiten Theorem 24 bestimmt.

Die Werte für den Wunschdifferenzschlupf $\lambda_{12}$, $\lambda_{13}$ werden im Voraus für die jeweiligen Paare 15, 16 von Achsen beispielsweise unter dem Gesichtspunkt möglichst geringen Verschleißes ermittelt.

Bezugszeichenliste (Bestandteil der Beschreibung)

1.    (Vorder-)Achse
2.    (zweite) Achse
3.    (dritte) Achse
4.    Bremsanlage
5.    Kraftfahrzeug
6.    Rad
7.    Radbremse
8.    Bremssteuereinheit
9.    Drucksteuerventil
10.   Drehzahlsensor
11.   Drehzahlmesswerte
12.   Stellsignale
13.   Speicherelement
14.   Auswertung
15.   Paar von Achsen

16. Paar von Achsen
17. Vergleichsschritt
18. Schwellwert
19. Regelung
20. Umschaltung
21. Schätzmodus
22. Bremskraftverteilung
23. Erstes Theorem
24. Zweites Theorem
25. Verknüpfung
26. μ-Schlupf-Kurve
27. Steigung
28. Stabiler Ast
29. Bezugsachse
30. Nutzfahrzeug

$F_1$      Teilbremskraft an Bezugsachse
$F_2$      Teilbremskraft an zweiter Achse
$F_3$      Teilbremskraft an dritter Achse
$F_{Total}$      Gesamtbremskraft
$\lambda_1$      Schlupfwert an Bezugsachse
$\lambda_2$      Schlupfwert an zweiter Achse
$\lambda_3$      Schlupfwert an dritter Achse $\delta\lambda 2$ Differenzschlupf zwischen zweiter Achse und Bezugsachse
$\delta\lambda 3$      Differenzschlupf zwischen dritter Achse und Bezugsachse
$\lambda_{12}$      Wunschdifferenzschlupf zwischen zweiter Achse und Bezugsachse
$\lambda_{13}$      Wunschdifferenzschlupf zwischen dritter Achse und Bezugsachse
$(\delta\lambda/\delta F)_1$      Schlupf/Kraftverhältnis Bezugsachse
$(5A/5F)_2$      Schlupf/Kraftverhältnis zweite Achse
$(\delta\lambda/\delta F)_3$      Schlupf/Kraftverhältnis dritte Achse

**Patentansprüche**

1. Verfahren zur elektronischen Einstellung der Bremskraftverteilung (22) einer gewünschten Gesamtbremskraft ($F_{Total}$) in Teilbremskräften ($F_1$, $F_2$, $F_3$) auf die Achsen (1, 2, 3) eines Kraftfahrzeugs (5) in Abhängigkeit des Differenzschlupfs ($\delta\lambda 2$, $\delta\lambda 3$, $\lambda_{12}$, $\lambda_{13}$), wobei der Differenzschlupf ($\delta\lambda 2$, $\delta\lambda 3$, $\lambda_{12}$, $\lambda_{13}$) als Differenz der Schlupfwerte ($\lambda_1$, $\lambda_2$, $\lambda_3$) einer den Schlupf an der jeweiligen Achse (1, 2, 3) repräsentierenden Größe erfasst und einem betreffenden Paar (15, 16) von Achsen (1, 2, 3) zugeordnet werden,
**dadurch gekennzeichnet, dass**
eine der Achsen (1, 2, 3) als Bezugsachse (29) ausgewählt und der jeweilige Differenzschlupf ($\delta\lambda 2$, $\delta\lambda 3$) eines Paares (15, 16) von Achsen (1, 2, 3) als Differenz des Schlupfwerts ($\lambda_1$) an der Bezugsachse (29) und des jeweiligen Schlupfwerts ($\lambda_2$, $\lambda_3$) einer der weiteren Achsen (2, 3) bestimmt wird, ein Schwellwert (18) für den Differenzschlupf ($\delta\lambda 2$, $\delta\lambda 3$) vorgegeben wird und bei Vorliegen von Differenzschlupf ($\delta\lambda 2$, $\delta\lambda 3$) unterhalb des vorgegebenen Schwellwerts (18) eine Teilbremskraft ($F_1$) an der Bezugsachse (1)

- in einem ersten Theorem (23) die gewünschte Gesamtbremskraft ($F_{To-tal}$) des Kraftfahrzeugs (5) als Summe der Teilbremskräfte ($F_1$, $F_2$, $F_3$) der bei der Bremskraftverteilung (22) berücksichtigten Achsen (1, 2, 3) angenommen wird,
- ein Schlupf-Kraftverhältnis (($\delta\lambda/\delta F)_1$, $(\delta\lambda/\delta F)_2$, $(\delta\lambda/\delta F)_3$) für die Achsen (1, 2, 3) vorgegeben oder ermittelt wird,
- in einem zweiten Theorem (24) der Differenzschlupf ($\delta\lambda 2$, $\delta\lambda 3$) als Differenz der jeweiligen Produkte eines Schlupf-Kraftverhältnisses (($\delta\lambda/\delta F)_1$, $(\delta\lambda/\delta F)_2$, $(\delta\lambda/\delta F)_3$) und der Teilbremskraft ($F_1$, $F_2$, $F_3$) an der jeweiligen bei der Bremskraftverteilung (22) berücksichtigten Achse (1, 2, 3) angenommen wird,
- wenigstens ein im Voraus bestimmter Wunschdifferenzschlupf ($\lambda_{12}$, $\lambda_{13}$) als Differenzschlupf ($\delta\lambda 2$, $\delta\lambda 3$) für die jeweiligen Paare (15, 16) von Achsen (1, 2, 3) vorgegeben wird und
- aus einer Verknüpfung (25) des ersten Theorems (23) mit dem zweiten Theorem (24) wird unter Berücksichtigung der Schlupf-Kraftverhältnisse (($\delta\lambda/\delta F)_1$, $(\delta\lambda/\delta F)_2$, $(\delta\lambda/\delta F)_3$) der Achsen (1, 2, 3) sowie des vorgegebenen Wunschdifferenzschlupfs ($\lambda_{12}$, $\lambda_{13}$) die Teilbremskraft ($F_1$) an der Bezugsachse (1) ermittelt und eingestellt wird.

**2.** Verfahren nach Anspruch 1,
**dadurch gekennzeichnet, dass**
unter Berücksichtigung der ermittelten Teilbremskraft ($F_1$) für die Bezugsachse (1) die jeweilige Teilbremskraft ($F_2$, $F_3$) an einer weiteren Achse (2, 3) nach dem zweiten Theorem (24) bestimmt wird.

**3.** Verfahren nach Anspruch 1 oder 2,
**dadurch gekennzeichnet, dass**
die Kraft/Schlupfverhältnisse (($\delta\lambda/\delta F)_1$, ($\delta\lambda/\delta P)_2$, ($\delta\lambda/\delta F)_3$) entsprechend der Steigung (27) im stabilen Ast (28) der jeweiligen $\mu$-Schlupf-Kurven (26) vorgegeben werden.

**4.** Verfahren nach einem der vorhergehenden Ansprüche,
**dadurch gekennzeichnet, dass**
der Schwellwert (18) für den Differenzschlupf ($\delta\lambda 2$, $\delta\lambda 3$) unter 10 % liegt.

**5.** Verfahren nach einem der vorhergehenden Ansprüche,
**dadurch gekennzeichnet, dass**
jeweils ein Wunschdifferenzschlupf ($\lambda_{12}$, $\lambda_{13}$) für jedes Paar (15, 16) von Achsen (1, 2, 3) ermittelt oder vorgegeben wird.

**6.** Verfahren nach einem der vorhergehenden Ansprüche,
**dadurch gekennzeichnet, dass**
als Bezugsachse (29) die in Fahrtrichtung des Fahrzeugs (5) vorn liegende Vorderachse (1) herangezogen wird.

**7.** Bremsanlage (4) zur elektronischen Einstellung der Bremskraftverteilung (22) einer gewünschten Gesamtbremskraft ($F_{Total}$) in Teilbremskräften ($F_1$, $F_2$, $F_3$) auf die Achsen (1, 2, 3) eines Kraftfahrzeugs (5) in Abhängigkeit von Differenzschlupfen ($\delta\lambda 2$, $\delta\lambda 3$, $\lambda_{12}$, $\lambda_{13}$), mit pro Achse (1, 2, 3) wenigstens einer einstellbaren Radbremse (7) und mit einer Bremssteuereinheit (8), welcher Sensoren (10) zur achsweisen Erfassung von Messwerten (11) zur Bestimmung von Schlupfwerten ($\lambda_1$, $\lambda_2$, $\lambda_3$) einer den Schlupf an der jeweiligen Achse (1, 2, 3) repräsentierenden Größe zugeordnet sind, wobei die Bremssteuereinheit (8) dazu ausgebildet ist, Differenzschlüpfe ($\delta\lambda 2$, $\delta\lambda 3$) als Differenz der Schlupfwerte ($\lambda_1$, $\lambda_2$, $\lambda_3$) zu bestimmen, jeweils dem betreffenden Paar (15, 16) von Achsen (1, 2, 3) zuzuordnen, sowie in Abhängigkeit der Differenzschlupfe ($\delta\lambda 2$, $\delta\lambda 3$, $\lambda_{12}$, $\lambda_{13}$) eine gewünschte Gesamtbremskraft ($F_{Total}$) in Teilbremskräften ($F_1$, $F_2$, $F_3$) auf die Achsen (1, 2, 3) zu verteilen,
**dadurch gekennzeichnet, dass**
die Bremssteuereinheit (8) dazu ausgebildet ist, eine der Achsen (1, 2, 3) als Bezugsachse (29) auszuwählen und den jeweiligen Differenzschlupf ($\delta\lambda 2$, $\delta\lambda 3$) eines Paares (15, 16) von Achsen (15, 16) als Differenz des Schlupfwerts ($\lambda_1$) an der Bezugsachse (29) und des Schlupfwerts ($\lambda_2$, $\lambda_3$) jeweils einer der weiteren Achsen (2, 3) zu bestimmen und unterhalb eines vorgegebenen Schwellwerts (18) des Differenzschlupfs ($\delta\lambda 2$, $\delta\lambda 3$) eine Teilbremskraft ($F_1$) an der als Bezugsachse (29) zu bestimmen und einzustellen, wobei aus einer Verknüpfung (25) eines ersten Theorems (23) mit einem zweiten Theorem (24) unter Berücksichtigung von für die jeweiligen Achsen (1, 2, 3) vorgegebenen oder ermittelten Schlupf-Kraftverhältnissen (($\delta\lambda/\delta F)_1$, ($\delta\lambda/\delta F)_2$, ($\delta\lambda/\delta F)_3$) und einem oder mehreren im Voraus bestimmten und vorgebbaren Wunschdifferenzschlupf ($\lambda_{12}$, $\lambda_{13}$) für den Differenzschlupf ($\delta\lambda 2$, $\delta\lambda 3$) der Paare (15, 16) von Achsen bestimmbar ist, wobei

- nach dem ersten Theorem (23) die gewünschte Gesamtbremskraft ($F_{Total}$) des Kraftfahrzeugs (5) die Summe der Teilbremskräfte ($F_1$, $F_2$, $F_3$) der einzelnen Achsen (1, 2, 3) ist,
- nach dem zweiten Theorem (24) der Differenzschlupf als Differenz der jeweiligen Produkte eines Schlupf-Kraftverhältnisses (($\delta\lambda/\delta F)_1$, ($\delta\lambda/\delta P)_2$, ($\delta\lambda/\delta F)_3$) und der Teilbremskraft ($F_1$, $F_2$, $F_3$) an der jeweiligen bei der Bremskraftverteilung (22) berücksichtigten Achse (1, 2, 3) angenommen wird.

**8.** Bremsanlage (4) nach Anspruch 7,
**dadurch gekennzeichnet, dass**
die Bezugsachse (29) die in Fahrtrichtung vorn liegende Achse (1) des Kraftfahrzeugs (5)ist.

**9.** Kraftfahrzeug (5), insbesondere Nutzfahrzeug (30), mit einer Bremsanlage (4) zur Bremskrafteinstellung nach Anspruch 7 oder 8, zur Durchführung des Verfahrens nach einem der Ansprüche 1 bis 6.

**Claims**

1. A method for electronically setting the brake force distribution (22) of a desired total braking force ($F_{Total}$) in partial braking forces ($F_1$, $F_2$, $F_3$) to the axles (1, 2, 3) of a motor vehicle (5) in dependence on the differential slip ($\delta\lambda2$, $\delta\lambda3$, $\lambda_{12}$, $\lambda_{13}$) wherein the differential slip ($\delta\lambda2$, $\delta\lambda3$, $\lambda_{12}$, $\lambda_{13}$) are detected as the difference of the slip values ($\lambda_1$, $\lambda_2$, $\lambda_3$) of a variable representing the slip at the respective axle (1, 2, 3) and are assigned to a relevant pair (15, 16) of axles (1,2,3), **characterized in that**
one of the axles (1, 2, 3) is selected as a reference axle (29) and the respective differential slip ($\delta\lambda2$,$\delta\lambda3$) of a pair (15, 16) of axles (1, 2, 3) is determined as the difference of the slip value ($\lambda_1$) at the reference axle (29) and of the respective slip value ($\lambda_2$, $\lambda_3$) of one of the further axles (2, 3), a threshold value (18) is prescribed for the differential slip ($\delta\lambda2$,$\delta\lambda3$) and, in the presence of differential slip ($\delta\lambda2$, $\delta\lambda3$) below the prescribed threshold value (18) a partial brake force ($F_1$) at the reference axle (1),

   - in a first theorem (23) the desired total braking force ($F_{Total}$) of the motor vehicle (5) is assumed as the sum of the partial braking forces ($F_1$, $F_2$, $F_3$) of the axles (1, 2, 3) considered in the brake force distribution (22),
   - a slip-force ratio ($\delta\lambda/\delta F)_1$, ($\delta\lambda/\delta F)_2$, ($\delta\lambda/\delta F)_3$ is prescribed or established for the axles (1, 2, 3),
   - in a second theorem (24) the differential slip ($\delta\lambda2$,$\delta\lambda3$) is assumed as the difference of the respective products of a slip-force ratio (($\delta\lambda/\delta F)_1$, ($\delta\lambda/\delta F)_2$, ($\delta\lambda/\delta F)_3$) and of the partial braking force ($F_1$, $F_2$, $F_3$) at the respective axle (1, 2, 3) considered in the brake force distribution (22),
   - at least one desired differential slip ($\lambda_{12}$, $\lambda_{13}$) determined in advance is prescribed as differential slip ($\delta\lambda2$, $\delta\lambda3$) for the respective pairs (15, 16) of axles (1, 2, 3), and
   - from a linking (25) of the first theorem (23) with the second theorem (24), with consideration of the slip-force ratios (($\delta\lambda/\delta F)_1$, ($\delta\lambda/\delta F)_2$, ($\delta\lambda/\delta F)_3$) of the axles (1, 2, 3) and of the prescribed desired differential slip ($\lambda_{12}$, $\lambda_{13}$), the partial braking force ($F_1$) at the reference axle (1) is established and set.

2. The method according to claim 1, **characterized in that** with consideration of the established partial braking force ($F_1$) for the reference axle (1), the respective partial braking force ($F_2$, $F_3$) at a further axle (2, 3) is determined according to the second theorem (24).

3. The method according to claim 1 or 2, **characterized in that** the force/slip ratios (($\delta\lambda/\delta F)_1$, ($\delta\lambda/\delta F)_2$, ($\delta\lambda/\delta F)_3$) are prescribed corresponding to the gradient (27) in the stable branch (28) of the respective $\mu$-slip curves (26).

4. The method according to any of the preceding claims, **characterized in that** the threshold value (18) for the differential slip ($\delta\lambda2$,$\delta\lambda3$) lies below 10%.

5. The method according to any of the preceding claims, **characterized in that** in each case a desired differential slip ($\lambda_{12}$, $\lambda_{13}$) for each pair (15, 16) of axles (1, 2, 3) is established or prescribed.

6. The method according to any of the preceding claims, **characterized in that** the front axle (1) situated to the front in the direction of travel of the vehicle (5) is used as the reference axle (29).

7. A braking system (4) for electronically setting the brake force distribution (22) of a desired total braking force ($F_{Total}$) in partial braking forces ($F_1$, $F_2$, $F_3$) to the axles (1, 2, 3) of a motor vehicle (5) in dependence on differential slips ($\delta\lambda2$,$\delta\lambda3$, $\lambda_{12}$, $\lambda_{13}$), having for each axle (1, 2, 3) at least one adjustable wheel brake (7) and having a brake control unit (8) which is assigned sensors (10) for the axle-by-axle detection of measurement values (11) for determining slip values ($\lambda_1$, $\lambda_2$, $\lambda_3$) of a variable representing the slip at the respective axle (1, 2, 3), wherein the brake control unit (8) is designed to determine differential slips ($\delta\lambda2$,$\delta\lambda3$) as the difference of the slip values ($\lambda_1$, $\lambda_2$, $\lambda_3$), to assign them in each case to the relevant pair (15, 16) of axles (1, 2, 3) and, in dependence on the differential slips ($\delta\lambda2$,$\delta\lambda3$, $\lambda_{12}$, $\lambda_{13}$), to distribute a desired total braking force ($F_{Total}$) in partial braking forces ($F_1$, $F_2$, $F_3$) to the axles (1, 2, 3), **characterized in that**
the brake control unit (8) is designed to select one of the axles (1, 2, 3) as a reference axle (29) and to determine the respective differential slip ($\delta\lambda2$,$\delta\lambda3$) of a pair (15, 16) of axles (15, 16) as the difference of the slip value ($\lambda_1$) at the reference axle (29) and of the slip value ($\lambda_2$, $\lambda_3$) of in each case one of the further axles (2, 3) and, below a prescribed threshold value (18) of the differential slip ($\delta\lambda2$,$\delta\lambda3$), to determine and set a partial braking force ($F_1$) at as the reference axle (29), which can be determined from a linking (25) of a first theorem (23) with a second theorem (24) with consideration of slip-force ratios (($\delta\lambda/\delta F)_1$, ($\delta\lambda/\delta F)_2$, ($\delta\lambda/\delta F)_3$) prescribed or established for the respective axles (1, 2, 3) and one or more desired differential slip ($\lambda_{12}$, $\lambda_{13}$) which is determined in advance can be prescribed for the differential slip ($\delta\lambda2$, $\delta\lambda3$) of the pairs (15, 16) of axles, wherein

- according to the first theorem (23) the desired total braking force ($F_{Total}$) of the motor vehicle (5) is the sum of the partial braking forces ($F_1$, $F_2$, $F_3$) of the individual axles (1, 2, 3),
- according to the second theorem (24) the differential slip is assumed as the difference of the respective products of a slip-force ratio ($(\delta\lambda/\delta F)_1$, $(\delta\lambda/\delta F)_2$, $(\delta\lambda/\delta F)_3$) and of the partial braking force ($F_1$, $F_2$, $F_3$) at the respective axle (1, 2, 3) considered in the brake force distribution (22).

8. The braking system (4) according to claim 7, **characterized in that** the reference axle (29) is the axle (1) of the motor vehicle (5) situated to the front in the direction of travel.

9. A motor vehicle (5), having a braking system (4) for braking force setting according to claim 7 or 8, for performing the method according to any of claims 1 to 6.

**Revendications**

1. Procédé de réglage électronique de la répartition de la force de freinage (22) d'une force de freinage totale ($F_{Total}$) souhaitée en forces de freinage partielles ($F_1$, $F_2$, $F_3$) sur les essieux (1, 2, 3) d'un véhicule automobile (5) en fonction du glissement différentiel ($\delta\lambda2$, $\delta\lambda3$, $\lambda_{12}$, $\lambda_{13}$), dans lequel le glissement différentiel ($\delta\lambda2$, $\delta\lambda3$, $\lambda_{12}$, $\lambda_{13}$) sont détectés, en tant que différence entre les valeurs de glissement ($\lambda_1$, $\lambda_2$, $\lambda_3$) d'une grandeur qui représente le glissement au niveau de l'essieu (1, 2, 3) respectif et attribués à une paire (15, 16) concernée d'essieux (1, 2, 3), **caractérisé en ce que**
l'un des essieux (1, 2, 3) est choisi en tant qu'essieu de référence (29) et le glissement différentiel ($\delta\lambda2$, $\delta\lambda3$) respectif d'une paire (15, 16) d'essieux (1, 2, 3) est déterminé en tant que différence entre la valeur de glissement ($\lambda_1$) au niveau de l'essieu de référence (29) et la valeur de glissement ($\lambda_2$, $\lambda_3$) respective de l'un des autres essieux (2, 3), une valeur de seuil (18) pour le glissement différentiel ($\delta\lambda2$, $\delta\lambda3$) est prédéfinie, et en présence d'un glissement différentiel ($\delta\lambda2$, $\delta\lambda3$) inférieur à la valeur de seuil (18) prédéfinie d'une force de freinage partielle ($F_1$) au niveau de l'essieu de référence (1),

- dans un premier théorème (23) la force de freinage totale ($F_{Total}$) souhaitée du véhicule automobile (5) est prise en tant que somme des forces de freinage partielles ($F_1$, $F_2$, $F_3$) des essieux (1, 2, 3) pris en considération lors de la répartition de la force de freinage (22),
- un rapport glissement-force ($(\delta\lambda/\delta F)_1$, $(\delta\lambda/\delta F)_2$, $(\delta\lambda/\delta F)_3$) est prédéfini ou établi pour les essieux (1, 2, 3),
- dans un second théorème (24) le glissement différentiel ($\delta\lambda2$, $\delta\lambda3$) est pris en tant que différence des produits respectifs d'un rapport glissement-force ($(\delta\lambda/\delta F)_1$, $(\delta\lambda/\delta F)_2$, $(\delta\lambda/\delta F)_3$) et de la force de freinage partielle ($F_1$, $F_2$, $F_3$) au niveau de l'essieu (1, 2, 3) respectif pris en considération lors de la répartition de la force de freinage (22),
- au moins un glissement différentiel souhaité ($\lambda_{12}$, $\lambda_{13}$) déterminé au préalable est prédéfini en tant que glissement différentiel ($\delta\lambda2$, $\delta\lambda3$) pour les paires (15, 16) respectives d'essieux (1, 2, 3), et
- depuis une combinaison (25) du premier théorème (23) avec le second théorème (24) est établie et réglée, en tenant compte du rapport glissement-force ($(\delta\lambda/\delta F)_1$, $(\delta\lambda/\delta F)_2$, $(\delta\lambda/\delta F)_3$) des essieux (1, 2, 3), ainsi que du glissement différentiel souhaité ($\lambda_{12}$, $\lambda_{13}$) prédéfini, la force de freinage partielle ($F_1$) au niveau de l'essieu de référence (1).

2. Procédé selon la revendication 1,
**caractérisé en ce que**
en tenant compte de la force de freinage partielle ($F_1$) établie pour l'essieu de référence (1), la force de freinage partielle ($F_2$, $F_3$) respective au niveau d'un autre essieu (2, 3) est déterminée selon le second théorème (24).

3. Procédé selon la revendication 1 ou 2,
**caractérisé en ce que**
les rapports force-glissement ($(\delta\lambda/\delta F)_1$, $(\delta\lambda/\delta F)_2$, $(\delta\lambda/\delta F)_3$) sont prédéfinis conformément à la pente (27) dans la branche (28) stable des courbes de glissement $\mu$ (26) respectives.

4. Procédé selon l'une des revendications précédentes,
**caractérisé en ce que**
la valeur de seuil (18) pour le glissement différentiel ($\delta\lambda2$, $\delta\lambda3$) se situe en-dessous de 10 %.

5. Procédé selon l'une des revendications précédentes,
**caractérisé en ce que**

respectivement un glissement différentiel souhaité ($\lambda_{12}$, $\lambda_{13}$) est établi ou prédéfini pour chaque paire (15, 16) d'essieux (1, 2, 3).

6. Procédé selon l'une des revendications précédentes,
   **caractérisé en ce que**
   en tant qu'essieu de référence (29) est utilisé l'essieu avant (1) qui se situe à l'avant dans le sens de déplacement du véhicule automobile (5).

7. Dispositif de freinage (4) pour le réglage électronique de la répartition de la force de freinage (22) d'une force de freinage totale ($F_{Total}$) souhaitée en forces de freinage partielles ($F_1$, $F_2$, $F_3$) sur les essieux (1, 2, 3) d'un véhicule automobile (5) en fonction de glissements différentiels ($\delta\lambda2$, $\delta\lambda3$, $\lambda_{12}$, $\lambda_{13}$), avec par essieu (1, 2, 3) au moins un frein de roue (7) réglable et avec une unité de commande de freinage (8) à laquelle sont attribués des capteurs (10) pour la détection rapportée aux essieux de valeurs de mesure (11) afin de déterminer des valeurs de glissement ($\lambda_1$, $\lambda_2$, $\lambda_3$) d'une grandeur qui représente le glissement au niveau de l'essieu (1, 2, 3) respectif, dans lequel l'unité de commande de freinage (8) est conçue pour déterminer des glissements différentiels ($\delta\lambda2$, $\delta\lambda3$) en tant que différence des valeurs de glissement ($\lambda_1$, $\lambda_2$, $\lambda_3$), respectivement à les attribuer à la paire (15, 16) concernée d'essieux (1, 2, 3), ainsi qu'en fonction des glissements différentiels ($\delta\lambda1$, $\delta\lambda2$, $\lambda_{12}$, $\lambda_{13}$) répartir sur les essieux (1, 2, 3) une force de freinage totale ($F_{Total}$) souhaitée en forces de freinage partielles ($F_1$, $F_2$, $F_3$),
   **caractérisé en ce que**
   l'unité de commande de freinage (8) est conçue pour choisir l'un des essieux (1, 2, 3) en tant qu'essieu de référence (29) et déterminer le glissement différentiel ($\delta\lambda2$, $\delta\lambda3$) respectif d'une paire (15, 16) d'essieux (15, 16) en tant que différence entre la valeur de glissement ($\lambda_1$) au niveau de l'essieu de référence (29) et la valeur de glissement ($\lambda_2$, $\lambda_3$) respectivement de l'un des autres essieux (2, 3) et, en-dessous d'une valeur de seuil (18) prédéfinie du glissement différentiel ($\delta\lambda2$, $\delta\lambda3$), déterminer et régler une force de freinage partielle ($F_1$) au niveau de en tant que l'essieu de référence (29), dans lequel à partir d'une combinaison (25) d'un premier théorème (23) avec un second théorème (24), en tenant compte de rapports glissement-force (($\delta\lambda/\delta F)_1$, ($\delta\lambda/\delta F)_2$, ($\delta\lambda/\delta F)_3$) prédéfinis ou établis pour les essieux (1, 2, 3) respectifs et d'un ou plusieurs glissements différentiels souhaités ($\lambda_{12}$, $\lambda_{13}$) déterminés et pouvant être prédéfinis au préalable peut être déterminé pour le glissement différentiel ($\delta\lambda2$, $\delta\lambda3$) des paires (15, 16) d'essieux, dans lequel

   - selon le premier théorème (23) la force de freinage totale ($F_{Total}$) souhaitée du véhicule automobile (5) est la somme des forces de freinage partielles ($F_1$, $F_2$, $F_3$) des essieux (1, 2, 3) individuels,
   - selon le second théorème (24) le glissement différentiel est pris en tant que différence des produits respectifs d'un rapport glissement-force (($\delta\lambda/\delta F)_1$, ($\delta\lambda/\delta F)_2$, ($\delta\lambda/\delta F)_3$) et de la force de freinage partielle ($F_1$, $F_2$, $F_3$) au niveau de l'essieu (1, 2, 3) respectif pris en considération lors de la répartition de la force de freinage (22).

8. Dispositif de freinage (4) selon la revendication 7,
   **caractérisé en ce que**
   l'essieu de référence (29) est l'essieu (1) qui se situe à l'avant dans le sens de déplacement du véhicule automobile (5).

9. Véhicule automobile (5), en particulier véhicule utilitaire (30), avec un dispositif de freinage (4) pour le réglage d'une force de freinage selon la revendication 7 ou 8, afin d'exécuter le procédé selon l'une des revendications 1 à 6.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3829951 A1
- DE 102006045317 A1
- DE 102011118130 B4